# EUROPÄISCHE PATENTSCHRIFT

(11) **EP 2 212 093 B1**
(45) Veröffentlichungstag und Bekanntmachung des Hinweises auf die Patenterteilung: **27.02.2013**
(21) Anmeldenummer: 08841621.9
(22) Anmeldetag: 18.10.2008
(51) Int. Cl.: B29L 23/18

(54) **VERFAHREN ZUR HERSTELLUNG EINES DOPPELWANDIGEN THERMOPLASTISCHEN WELLROHRES MIT EINER ROHRMUFFE**
METHOD FOR PRODUCING A DOUBLE-WALLED THERMOPLASTIC CORRUGATED PIPE HAVING A CONNECTING SLEEVE
PROCÉDÉ DE FABRICATION D'UN TUBE ONDULÉ THERMOPLASTIQUE À DOUBLE PAROI, DOTÉ D'UN MANCHON DE RACCORD

(30) Priorität: 23.10.2007 DE 102007050923
(43) Veröffentlichungstag der Anmeldung: 04.08.2010
(60) Teilanmeldung: 12197852.2
(73) Patentinhaber: UNICOR GmbH, 97437 Hassfurt (DE)
(72) Erfinder: KOSSNER, Hubert, 97523 Schwanfeld (DE)
(74) Vertreter: Köhler, Walter
(86) Internationale Anmeldenummer: PCT/EP2008/008848
(87) Internationale Veröffentlichungsnummer: WO 2009/053009

(56) Entgegenhaltungen:
- EP-A- 0 563 575
- WO-A-95/01251
- WO-A-02/070238
- JP-A- 61 148 036
- US-B1- 6 458 311

## Beschreibung

Die Erfindung betrifft ein Verfahren zur Herstellung eines doppelwandigen aus vorzugsweise thermoplastischen Kunststoff bestehenden Wellrohres mit Rohrmuffe.

Aus der EP 0563 575 B1 ist ein solches Verfahren mit zugehöriger Vorrichtung bekannt. Bei dem Wellrohr handelt es sich um ein Verbundwellrohr bestehend aus einem glatten Innenrohr und einem gewellten Außenrohr, das im Bereich seiner Wellentäler mit dem Innenrohr verschweißt ist. Das Verbundrohr weist einen Muffenabschnitt auf, in welchem das Außenrohr eine glatte zylindrische oder leicht konische Muffenausformung aufweist, und auch das Muffeninnenrohr einen entsprechenden glatten zylindrischen oder leicht konischen Muffenabschnitt hat, der an der Innenseite der Muffenausformung des Außenrohrs anliegt und dort verschweißt ist. Die Herstellung dieses Muffenrohrs erfolgt fortlaufend, indem ein doppelwandiges Endlosrohr mit aufeinander folgenden Wellrohrabschnitten und Muffenausformungen erzeugt wird. Das Endlosrohr wird abgelängt, um so das Muffenrohr bestehend aus einem Wellrohrabschnitt und einem Muffenabschnitt herzustellen.

Die Fertigung des Endlosrohres erfolgt dadurch, daß über einen Spritzkopf einer Extrusionsvorrichtung ein doppelwandiger Kunststoffschmeizeschlauch extrudiert wird, indem aus einer ersten Düse ein Außenschlauch extrudiert wird und über eine nachgeschaltete zweite Düse des Spritzkopfs ein Innenschlauch konzentrisch in den Außenschlauch hinein extrudiert wird, WO 95/01251 A1 zeigt die Merkmale des Oberbegriffs des Anspruchs 1. Die Ausformung der Wellen und Muffenabschnitte erfolgt in einem dem Spritzkopf nachgeschalteten Korrugator, d. h. in dessen Formkanal, der durch umlaufende Formbackenpaare aufeinander folgende gewellte und zylindrische oder leicht konische Formflächen aufweist.

Bei der Ausformung des Außenschlauchs und des Innenschlauchs in dem Formkanal des Korrugators gemäß dem Verfahren wie es in der EP 0 583 575 B1 beschrieben ist, erfordert es eine komplexe Steuerung der auf den Innenschlauch und den Außenschlauch einwirkenden Drücke. Die Drücke müssen jeweils sehr genau auf den jeweiligen Formvorgang des Außen- und Innenschlauchs abgestimmt werden. Da die Aufweitung des Außenschlauchs und die Aufweitung des Innenschlauchs zeitlich versetzt eingeleitet und aber überlappend gleichzeitig verlaufen, ist die Abstimmung der auf den Innenschlauch und auf den Außenschlauch einzuwirkenden unterschiedlichen Drücke hinsichtlich ihrer zeitlichen Folge und hinsichtlich der Höhe der Drücke sehr aufwendig.

Entsprechendes gilt für das in der WO 02/070238 A1 und in der DE 103 35 518 A1 beschriebene Herstellungsverfahren und Vorrichtung. Auch dort ist die Abstimmung der auf den Innenschlauch und Außenschlauch gleichzeitig einwirkenden unterschiedlichen Drücke sehr aufwendig.

Der Erfindung liegt die Aufgabe zugrunde, ein Verfahren der eingangs genannten Art zu entwickein ,mit dem Ziel eine besonders einfache und sichere Verfahrensführung zu erhalten.

Die Erfindung löst diese Aufgabe mit dem Verfahren gemäß dem kennzeichnenden Teil des Patentanspruchs 1 Wesentlich hierbei ist, daß das Verfahren eine Verfahrungsführung ermöglicht, bei der zunächst der Außenschlauch in die zylindrische oder leicht konische Muffenausformung der Formfläche vollständig zur Anlage gebracht wird und sodann erst der Innenschlauch an der Innenseite des bereits in Anlage an der zylindrischen oder leicht konischen Muffenausformung liegenden Außenschlauchs in Anlage gebracht wird. Es wird damit eine besonders einfache Drucksteuerung möglich, da bei der Muffenausformung keine komplizierte Drucksteuerung für den auf den Innenschlauch und den Außenschlauch einwirkenden Druck notwendig wird.

Die zeitliche Abfolge für die Muffenausformung des Außenschlauchs und des Innenschlauchs kann so gewählt werden, daß keine zeitlichen Überlappungen auftreten. Vorrichtungsmäßig besonders einfach kann dieses Konzept umgesetzt werden, wenn der axiale Abstand zwischen der ersten Düse, aus der der Außenschlauch extrudiert wird, und der zweiten Düse, aus der der Innenschlauch extrudiert wird, größer gewählt wird als die axiale Längenerstreckung der auszubildenden Muffe. Entscheidend für den Abstand ist der Abstand der Düsenenden, an denen der Außenschlauch bzw., der Innenschlauch austritt.

Weitere Merkmale und Vorteile von möglichen Ausführungen werden anhand der Figuren, die ein bevorzugtes Ausführungsbeispiel zeigen, erörtert.

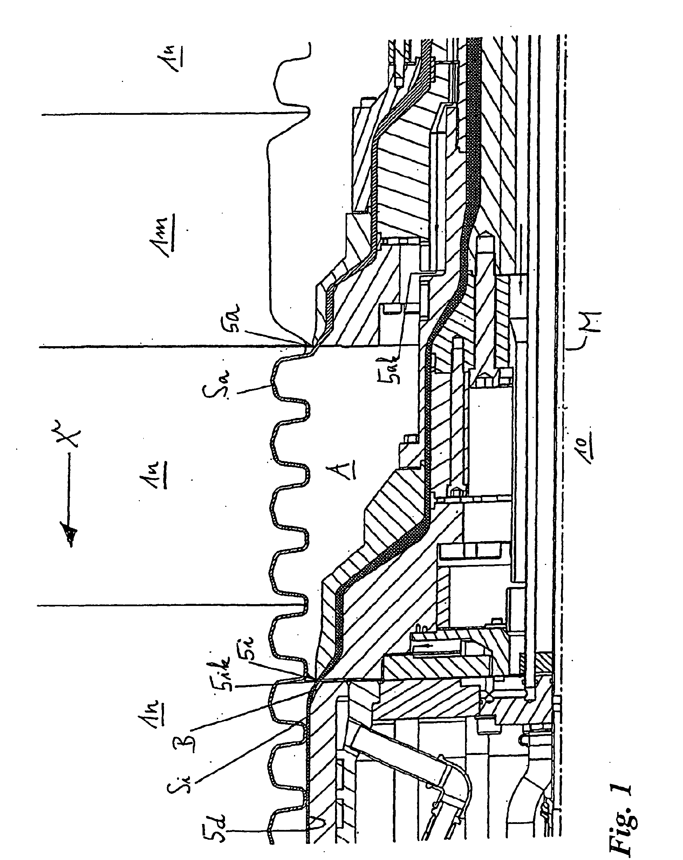

Die Erfindung wird nun für ein bevorzugtes Ausführungsbeispiel anhand von Figuren näher erläutert.
- Dabei zeigen Fig. 1 bis Fig. 7: schematische Schnittdarstellungen eines Ausschnitts des Formkanals im Anfangsbereich der Formstrecke mit in den Formkanal hineinragender Düseneinrichtung, unterschiedliche nacheinander abfolgende Verfahrensstadien zeigend.

Der Korrugator in dem dargestellten Ausführungsbeispiel weist Formbacken 1 n, 1 m auf, die in einer linearen Formstrecke 10 paarweise hintereinander in Produktionsrichtung X fortschreitend geführt sind. Die Formbackenpaare umgeben mit ihrer nach innen gewandten Formfläche jeweils einen im wesentlichen zylindrischen Formhohlraum. Die in der Formstrecke 10 axial hintereinander geführten Formbackenpaare bilden einen aus den zylindrischen Formhohlräumen zusammengesetzten Formkanal, der sich entlang der in den Figuren eingezeichneten zentralen Mittelachse M erstreckt.

In den in den Figuren dargestellten Anfangsbereich des Formkanals 10 ragt eine Düseneinrichtung 5 eines nicht dargestellten Extruders. Die Düseneinrichtung 5 ist entlang der zentralen Mittelachse M ausgerichtet. Der Korrugator mit seinen Formbacken 1n, 1m und die Düseneinrichtung 5 sind jeweils symmetrisch zur zentralen Mittelachse M ausgebildet. In den Figuren ist lediglich die rechte Symmetrieseite dargestellt, d.h. lediglich die rechten Formbacken 1n, 1 m und lediglich die rechte Seite der symmetrischen Düseneinrichtung. Die entsprechend ausgebildeten und angeordneten linken Formbacken 1n, 1m und die linke Seite der Düseneinrichtung 5 sind also in den Figuren nicht dargestellt.

Aus der Düseneinrichtung 5 treten zwei konzentrische thermoplastische Kunststoffschmelzeschläuche in den Formkanal ein. Bei den Kunststoffschmelzeschläuchen handelt es sich um einen Außenschlauch Sa und einen Innenschlauch Si. Diese Kunststoffschmelzeschläuche durchlaufen in der Formstrecke 10 den Formkanal in Produktionsrichtung X. Sie werden dabei an den Formflächen der Formbacken 1n, 1 m geformt und gekühlt und verlassen den Formkanal als doppelwandiges Endloswellrohr mit Muffenabschnitten.

Die Formbacken 1 n, 1 m werden in dem Formkanal zur fortschreitenden Bewegung in Produktionsrichtung X über einen nicht dargestellten Antriebsmotor angetrieben. Der Antriebsmotor kann bodenseitig in dem Maschinentisch, auf dem die Formbacken 1n, 1m geführt sind, angeordnet sein und über ein Abtriebsritzel mit an den Formbacken bodenseitig ausgebildeten Zahnstangen kämmen. Die Formbacken 1 n, 1 m werden jeweils vom Ende der Formstrecke 10 zum Anfang der Formstrecke rückgeführt. Dies ist in den Figuren nicht dargestellt. Die Rückführung kann über eine motorisch angetriebene Greifereinrichtung, vorzugsweise eine Greifereinrichtung für die linken Formbacken und eine Greifereinrichtung für die rechten Formbacken erfolgen oder auch dadurch, dass die linken und die rechten Formbacken in umlaufenden Führungsbahnen, vorzugsweise über motorisch angetriebene Mitnehmer geführt werden.

Bei den in der Formstrecke 10 in den Figuren eingesetzten Formbacken ist zwischen Normalformbacken 1n und Muffenformbacken 1 m zu unterscheiden. Die Normalformbacken 1n weisen gewellte Formfläche zur Ausformung der gewellten Rohrabschnitte auf. Die Muffenformbacken 1m weisen eine vorzugsweise glatte zylindrische oder leicht konische Muffenformfläche auf und dienen zur Ausformung der vorzugsweise glatt zylindrischen Muffenrohrabschnitte. Vorzugsweise werden jeweils mehrere Paare von Normalformbacken 1 n und nur ein Paar oder wenige Paare von Muffenformbacken 1m in dem Formbackenkreislauf und damit in der Formstrecke 10 geführt. Bei sogenannten Shuttlekorrugatoren, wie zum Beispiel bekannt aus EP 0 270 694 B1, können die Muffenformbacken auch, falls gewünscht, jeweils nur temporär in den Kreislauf eingeschleust werden, d.h. nach ihrer Einschleusung wieder aus dem Kreislauf entfernt und in einer Parkstation auf dem Maschinentisch geparkt werden.

Die Düseneinrichtung 5 ist in dem dargestellten Fall so ausgebildet, dass die aus der Düseneinrichtung austretenden Kunststoffschmelzeschläuche, wie oben erwähnt, als zwei Kunststoffschmelzeschläuche ausgebildet sind, nämlich als ein Innenschlauch Si und ein Außenschlauch Sa. Die Düseneinrichtung 5 weist eine Außendüse 5a und eine Innendüse 5i auf. An dem Austrittsende der Außendüse 5a tritt der Außenschlauch Sa aus. An dem Austrittsende der Innendüse 5i tritt der Innenschlauch Si aus. Das Austrittsende der Außendüse 5a ist dem Austrittsende der Innendüse 5i - in Produktionsrichtung X gesehen - vorgeschaltet. Somit kann man sagen, dass der Innenschlauch Si in den Außenschlauch Sa hineinextrudiert wird. An der Innendüse 5i ist ein Kühldorn 5d - in Produktionsrichtung X gesehen - nachgeschaltet.

Der Außendüse 5a ist ein Luftkanal 5ak und der Innendüse 5i ein Luftkanal 5ik zugeordnet. Das Austrittsende des Luftkanals 5ak ist dem Austrittsende der Außendüse 5a - in Produktionsrichtung X gesehen - nachgeschaltet. Über den Luftkanal 5ak wird Luft, sogenannte Außenluft, als Stützluft des Außenschlauches Sa in den Raum A, der zwischen der Innenwandung des Außenschlauchs Sa und der Außenwandung des Innenschlauchs Si ausgebildet ist, eingeblasen. Über den Luftkanal 5ik wird in entsprechender Weise Luft, sogenannte Innenluft, als Stützluft des Innenschlauches Si in den Raum B zwischen der Innenwandung des Innenschlauchs Si und der Außenwandung des Kühldorns 5d eingeblasen. Der Druck pa der Außenluft kann über einen mit dem Luftkanal 5ak verbundenen Druckregler, z. B. abhängig von den jeweiligen Positionen der eingesetzten Formbacken im Formkanal und/oder nach einem vorgegebenen Druckprofil geregelt werden. In entsprechender Weise kann der Druck pi der Innenluft über einen mit dem Luftkanal 5ik verbundenen Druckregler geregelt werden.

Wesentlich bei dem dargestellten Ausführungsbeispiel ist, dass der Abstand zwischen dem Austrittsende der Außendüse 5a und dem Austrittsende der Innendüse 5i größer ist als die axiale Erstreckung der Muffenformfläche L. In dem dargestellten Fall in den Figuren ist der Düsenabstand ca. 1,4 mal so groß wie die axiale Erstreckung der Muffenformfläche L.

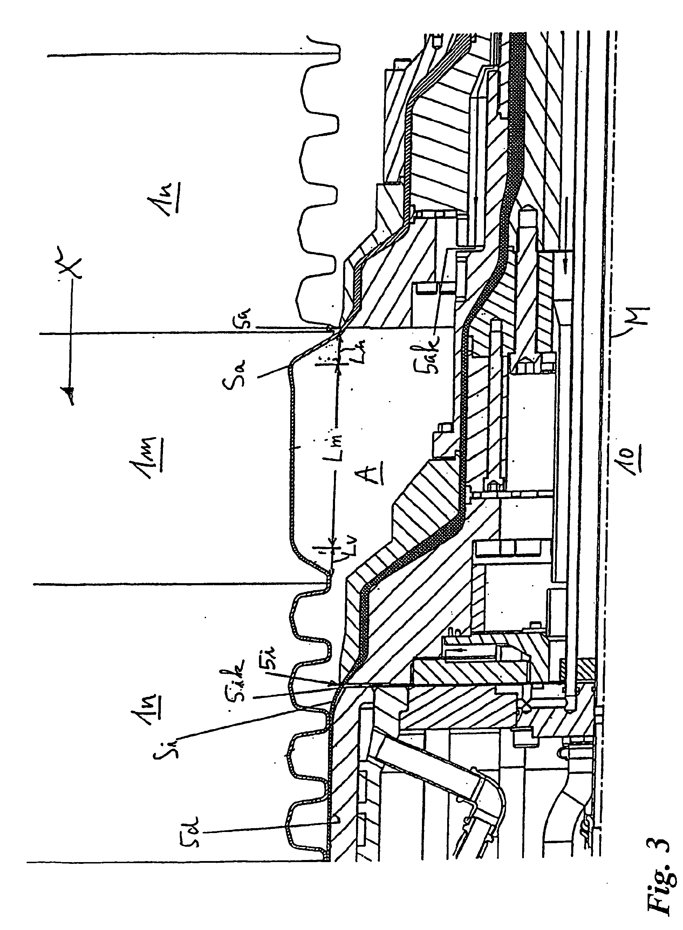

Bei dem dargestellten Ausführungsbeispiel wird die Muffenformfläche jeweils durch nur ein Muffenformbackenpaar gebildet. Die Formfläche des Muffenformbackens 1 m weist jeweils eine glatte zylindrische oder leicht konische Formfläche mit der axialen Länge Lm auf, in Produktionsrichtung X gesehen, vor und nach dieser Muffenfläche jeweils anschließend einen Übergangsbereich mit der axialen Länge Lv und Ln vorhanden. Die gesamte axiale Länge L der Muffenformfläche ergibt sich aus der Summe aus Lv, Lh, Lm (sh. Fig. 3).

Die Formfläche der Normalformbacken 1 n weist jeweils eine gewellte Formfläche auf, mit axial hintereinander angeordneten parallelen Wellen mit periodisch wiederkehrenden Wellenbergen und Wellentälern, jeweils koaxial um die zentrale Mittelachse M des Formkanals angeordnet.

Die Formbacken 1 n, 1 m weisen, wie ansich bekannt, in den Formflächen Vakuumöffnungen auf, die mit Vakuumkanälen in den Formbacken über eine nicht dargestellte Vakuumeinrichtung dargestellt sind, um die Anlage des Außenschlauchs an den Formflächen zu unterstützen.

Das in dem dargestellten Fall in der Formstrecke 10 ausgeformte Endlosrohr erhält in den Abschnitten, in denen die Normalformbacken 1n einwirken, die Ausformung eines doppelwandigen Wellrohrs mit gewelltem Außenrohr und einem glatten zylindrischen Innenrohr, das mit dem Außenrohr jeweils in dem Bereich der Wellentäler verschweißt ist. In den Abschnitten, in denen die Muffenformbacken 1m einwirken, erhält das Endlosrohr Muffenabschnitte, d. h. eine Muffenausformung mit der axialen Länge L= Lm + Lv + Lh. In dem gesamten Bereich der Länge L der Muffenausformung sind der Außenschlauch und der Innenschlauch vollflächig miteinander verschweißt.

Die Arbeitsweise wird nun anhand der Figuren 1 bis 7 beschrieben, die die unterschiedlichen Verfahrensstadien im Formkanal 10 im Bereich der Düseneinrichtung 5 zeigen. Die unterschiedlichen Verfahrensstadien werden dadurch bestimmt, welches Formbackenpaar, d.h. welche Formfläche, ob eine gewellte Formfläche oder eine Muffenformfläche gerade im Anfangsbereich der Formstrecke 10 den Bereich der Düseneinrichtung 5 passiert. In der nachfolgenden Verfahrensbeschreibung wird daher jeweils lediglich die Formfläche, d.h. gewellte Formfläche oder Muffenformfläche genannt und berücksichtigt und also unabhängig davon behandelt, ob diese jeweils von einer oder mehreren Formbacken gebildet ist. Die den jeweiligen Formflächen zugeordneten Formbacken 1n, 1 m sind in den Figuren zur besseren Anschaulichkeit jedoch eingezeichnet.

### Figur 1:

Figur 1 zeigt das Stadium kurz bevor die Vorderkante der Muffenformfläche über die Außendüse 5a läuft. Die gesamte axiale Länge der Muffenformfläche befindet sich noch vor der Außendüse 5a. Der Muffenformfläche in Produktionsrichtung X gesehen vor- und nachgeschaltet sind jeweils gewellte Formflächen, so dass also im Bereich zwischen der Außendüse 5a und der Innendüse 5i und im Bereich vor der Innendüse 5i jeweils gewellte Formflächen angeordnet sind.

Der durch die Außenluft in dem Raum A eingestellte Druck wird gerade vom Druck pa1 auf den Druck pa2 reduziert. Der durch die Innenluft in dem Raum B eingestellte Druck liegt bei pi1.

Der aus der Außendüse 5a austretende Außenschlauch Sa legt sich gerade unter Einwirkung des im Raum A herrschenden Drucks an die gewellte Formfläche an. Der gesamte gezeigte in Produktionsrichtung X in Fig. 1 anschließende Außenschlauch Sa liegt bereits an der gewellten Formfläche an.

Der aus der Innendüse 5i austretende Innenschlauch Si wird unter Einwirkung des im Raum B eingestellten Drucks pi1 und/oder durch den Kühldorn 5d zum Wellental des an der gewellten Formfläche anliegenden Außenschlauchs hingedrückt, um dort zu verschweißen. Der gesamte in Produktionsrichtung X in Fig. 1 sich fortsetzende Innenschlauch Si liegt bereits als glatter zylindrischer Innenschlauch an den Wellentälern des Außenschlauchs Sa an und ist dort jeweils verschweißt.

### Figur 2:

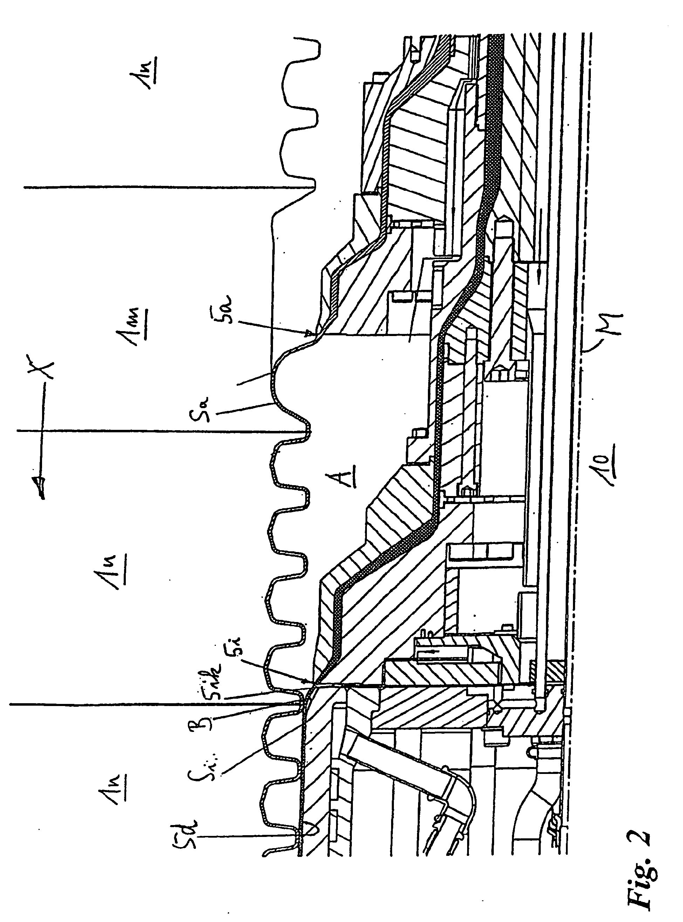

Figur 2 zeigt das Stadium, wenn die Muffenformfläche sich gerade über der Außendüse 5a befindet. Ein erster Abschnitt der Muffenformfläche hat die Außendüse 5a bereits passiert. Ein zweiter Abschnitt der Muffenformfläche ist noch vor der Außendüse 5a.

Der Druck im Raum A ist als konstanter Druck pa2 eingestellt oder als mit der Zeit abfallender Druck pa2 eingestellt. Der Druck im Raum B liegt noch konstant bei pi1.

Der aus der Außendüse 5a austretende Außenschlauch Sa legt sich gerade unter Einwirkung des im Raum A herrschenden Drucks an die Muffenformfläche an. Der weitere Außenschlauch in Produktionsrichtung X liegt bereits an der gewellten Formfläche an.

Der Innenschlauch Si wird gerade, gleich wie in Figur 1, nach seinem Austritt aus der Innendüse 5i unter Einwirkung des im Raum B eingestellten Drucks pi1 und/oder durch den Kühldorn 5d zum Wellental des an der gewellten Formfläche anliegenden Außenschlauchs hingedrückt, um dort zu verschweißen.

### Figur 3:

Figur 3 zeigt das Stadium, wenn die Muffenformfläche die Außendüse 5a vollständig passiert hat. Der in Produktionsrichtung X in Fig. 1 sich fortsetzende Außenschlauch Sa liegt bereits über die gesamte axiale Länge der Muffenausformung flächig an dieser an, und in seinem weiteren Verlauf in X-Richtung liegt er an der gewellten Formfläche an.

Der Druck in dem Raum A wird von pa2 wieder auf pa1 erhöht. Der Druck in dem Raum B liegt weiter konstant bei pi1.

Der aus der Außendüse austretende Außenschlauch Sa legt sich gerade unter Einwirkung des im Raum A herrschenden Drucks im Bereich des hinteren Endes der Muffenformfläche an.

Der Innenschlauch Si wird gerade, gleich wie in den Figuren 1 und 2, unter Einwirkung des im Raum B eingestellten Drucks pi1 zum Wellental des an der gewellten Formfläche anliegenden Außenschlauchs hingedrückt und dort verschweißt. Der in Produktionsrichtung X sich fortsetzende Innenschlauch Si liegt bereits als glatter zylindrischer Innenschlauch an den Wellentälern des Außenschlauches an.

### Figur 4:

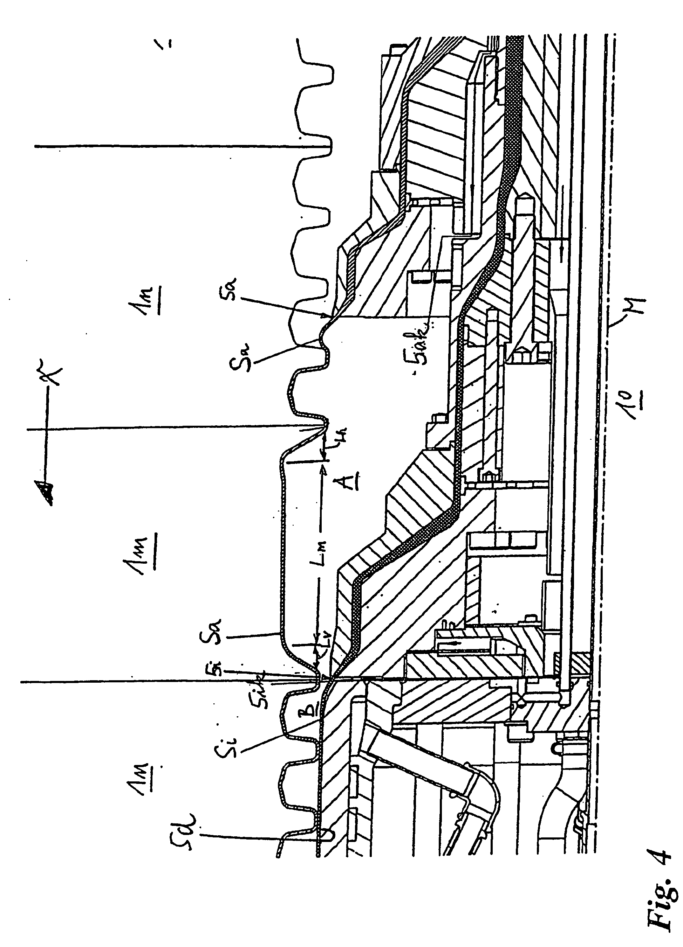

Figur 4 zeigt das Stadium, wenn die Muffenformfläche gerade die Position der Innendüse 5i erreicht.

In dem Raum A ist der in Fig. 3 umgestellte Druck pa1 eingestellt. Der Druck im Raum B wird gerade von dem Druck pi1 auf den Druck pi2 erhöht.

Der aus der Außendüse 5a austretende Außenschlauch Sa wird unter Einwirkung des im Raum A herrschenden Druckes zur Anlage an die über der Außendüse 5a stehende gewellte Formfläche gebracht. Im weiteren Verlauf des Außenschlauchs Si in Produktionsrichtung X liegt dieser bereits an der Muffenformfläche und an der in Produktionsrichtung X vorangehenden gewellten Formfläche an.

Der aus der Innendüse austretende Innenschlauch Si wird gerade unter Einwirkung des im Raum B herrschenden Druckes zu dem an der Formfläche anliegenden Außenschlauch Sa, und zwar zum letzten Wellental vor der Muffenausformung, hingedrückt und verschweißt.

### Figur 5:

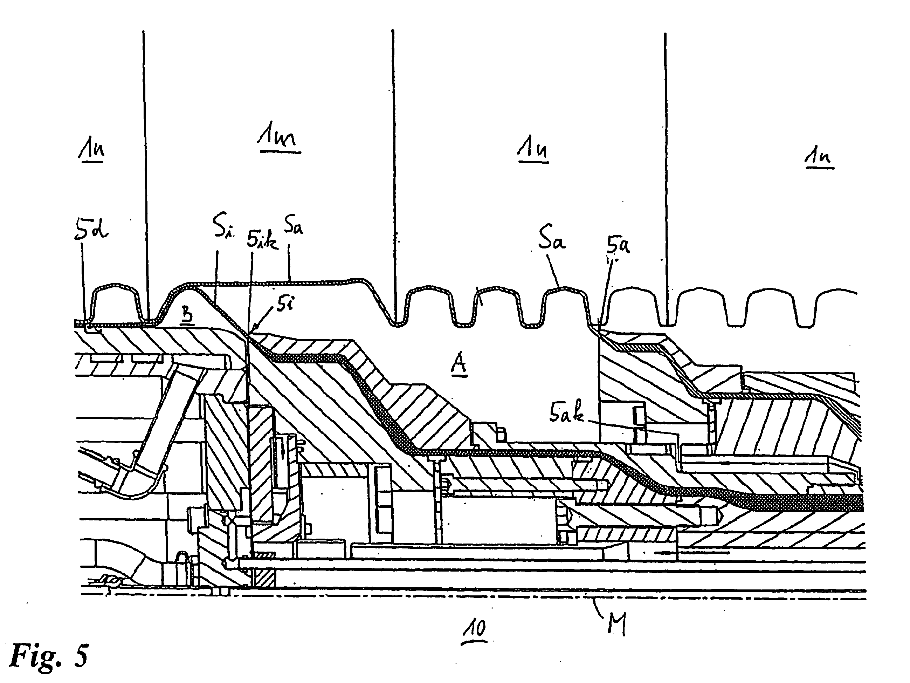

Figur 5 zeigt das Stadium, wenn die Muffenformfläche sich gerade über der Position der Innendüse 5i befindet, und zwar hat ein erster Abschnitt der Muffenformfläche die Innendüse bereits passiert und ein zweiter Abschnitt liegt noch vor der Position der Innendüse 5i.

In dem Raum A ist weiterhin konstanter Druck pa1 eingestellt. In dem Raum B ist weiterhin konstanter oder abfallender oder alternierender Druck pi2 eingestellt.

Der aus der Außendüse 5a austretende Außenschlauch Sa wird gerade in Anlage an die über der Außendüse 5a stehenden gewellten Formfläche gebracht. Im weiteren Verlauf des Außenschlauchs Si in Produktionsrichtung X liegt der Außenschlauch Sa bereits an der Muffenformfläche und an der vorangehenden gewellten Formflächen in Anlage.

Der aus der Innendüse 5i austretende Innenschlauch wird gerade unter Einwirkung des im Raum B eingestellten Drucks pi2 an die Innenseite des an der Muffenformfläche bereits anliegenden Außenschlauchs hingedrückt und in flächiger Anlage gebracht.

### Figur 6:

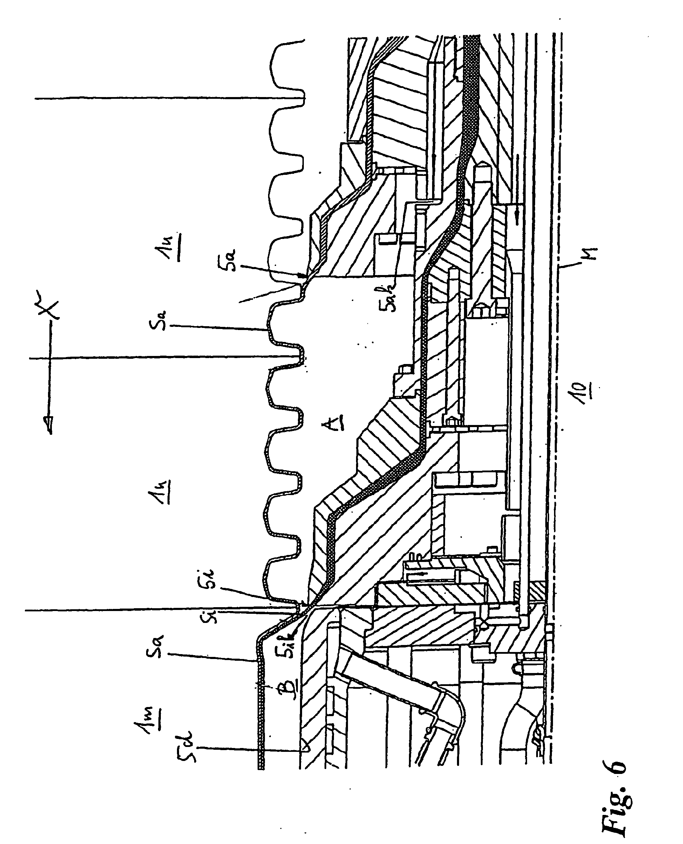

Figur 6 zeigt das Stadium, wenn die Muffenformfläche gerade die Position der Innendüse 5i passiert hat.

Der Druck im Raum B wird gerade auf den Druck pi1 reduziert. In dem Raum A ist weiterhin der Druck pa1 konstant eingestellt:

Der aus der Außendüse 5a austretende Außenschlauch wird gerade unter Einwirkung des im Raum A herrschenden Drucks an die über der Außendüse 5a angeordneten gewellten Formfläche zur Anlage gebracht. Im weiteren Verlauf des Außenschlauchs Sa in Produktionsrichtung X ist dieser in Anlage an der gewellten Außenfläche und in Anlage an der vorgeschalteten Muffenformfläche.

Der aus der Innendüse 5i austretende Innenschlauch Si wird gerade unter Einwirkung des im Raum B herrschenden Drucks an den in der Muffenausformung bereits in Anlage liegende Außenschlauch zur flächigen Anlage gebracht. Der Innenschlauch 5i ist in seinem weiteren Verlauf in Produktionsrichtung X bereits in flächiger Anlage an dem in der Muffenformfläche in Anlage liegenden Außenschlauch Sa.

### Figur 7:

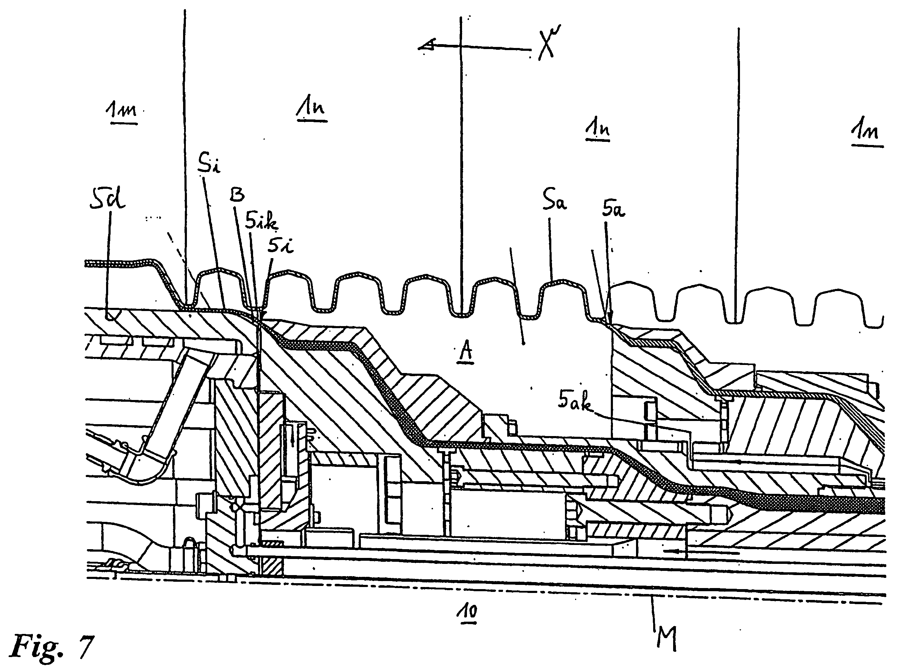

Figur 7 zeigt das Stadium, wenn die Muffenformfläche die Innendüse 5i bereits vollständig passiert hat und auch bereits ein erster Abschnitt der der Muffenformfläche nachgeschalteten gewellten Formfläche die Innendüse 5i passiert hat und auch über dem gesamten Bereich zwischen der Innendüse 5i und der Außendüse 5a gewellte Formfläche angeordnet ist.

In dem Raum B ist der Druck weiterhin konstant bei pi1 und in dem Raum A der Druck weiterhin konstant bei pa1 eingestellt.

Der aus der Außendüse 5a austretende Außenschlauch wird gerade unter Wirkung des Drucks pa1 an die gewellte Formfläche zur Anlage gebracht. Im weiteren Verlauf des Außenschlauchs Sa in Produktionsrichtung X ist dieser bereits in Anlage an der jeweiligen Formfläche.

Der aus der Innendüse 5i austretende Innenschlauch Si wird gerade unter Einwirkung des im Raum B eingestellten Drucks pi1 und/oder durch den Kühldorn 5d zum Wellental des an der gewellten Formfläche anliegenden Außenschlauchs hingedrückt und dort verschweißt. Der in Produktionsrichtung X vorangehende Außenschlauch Sa liegt an der gewellten Formfläche an und der in Produktionsrichtung X vorangehende Innenschlauch liegt als glatter zylindrischer Schlauch an den Wellentälern des Außenschlauchs verschweißt an.

Diese Verfahrensstadien der Figuren 1 bis 7 wiederholen sich aufgrund der im Kreislauf geführten Formbacken jeweils zyklisch am Beginn der Formstrecke.

Am Ende der Formstrecke 10 tritt ein endloses doppelwandiges Rohr aus mit alternierend angeordneten Wellrohrabschnitten und Muffenrohrabschnitten. Durch Ablängen des endlosen Rohres werden Wellrohre mit Rohrmuffen gebildet.

Vorzugsweise wird beispielsweise für die Herstellung eines Wellrohres mit Rohrdurchmesser von 100 mm und typischer Wandstärke von 0,3 mm die Außenluft mit pa1 bei 0,5 bar und pa2 bei 0,45 bar und die Innenluft mit pi1 bei 0,5 bar und pi2 bei 0,7 bar gefahren. Die angegebenen Druckwerte pa1, pa2, pi1 und pi2 sind hierbei jeweils Überdruckwerte über dem Umgebungsdruck, d.h. jeweils der Betrag der Druckdifferenz zwischen dem auf die Innenfläche des betreffenden Schlauchs einwirkenden Druck und dem herrschenden Umgebungsdruck.

### Bezugszeichenliste:

- 1 n: Normalformbacken
- 1m: Muffenformbacken
- 5: Düseneinrichtung
- 5a: Außendüse
- 5ak: Luftkanal Außenluft
- 5i: Innendüse
- 5ik: Luftkanal Innenluft
- 5d: Kühldorn
- 10: Formstrecke
- Sa: Außenschlauch
- Si: Innenschlauch
- X: Produktionsrichtung
- M: Zentrale Mittelachse
- pa1: Druck der Außenluft im Raum A
- pa2: Druck der Außenluft im Raum A
- pi1: Druck der Innenluft im Raum B
- pi2: Druck der Innenluft im Raum B
- Lm: axiale Länge der glatten zylindrischen Muffenformfläche
- Lv: axiale Länge des vorderen Übergangsbereichs der Muffenformfläche
- Lh: axiale Länge des hinteren Übergangsbereichs der Muffenformfläche

## Patentansprüche

1. Verfahren zur Herstellung eines endlosen doppelwandigen aus vorzugsweise thermoplastischem Kunststoffmaterial bestehenden Rohres mit Wellrohrabschnitten und Muffenrohrabschnitten,
durch Extrusion eines das Außenrohr des doppelwandigen Rohres bildenden Außenschlauchs (Sa) und eines das Innenrohr des doppelwandigen Rohres bildenden Innenschlauchs (SI) in einem Formkanal (10) mit mindestens einem Abschnitt mit geweilter Formfläche und mindestens einem Abschnitt mit vorzugsweise glatter, zylindrischer oder leicht konischer Muffenformfläche;
wobei vorgesehen ist,
dass zur Ausformung eines Wellrohrabschnitts der Außenschlauch (Sa) in die geweilte Formfläche extrudiert wird und an der geweilten Formfläche zur Anlage gebracht wird, und der Innenschlauch (Si) in den Außenschlauch (Sa) extrudiert wird und an den an der geweilten Formfläche anliegenden Außensehlauch (Sa) im Bereich der Wellentäler des Außenschlauchs (Sa) zur Anlage gebracht wird;
dass zur Ausformung eines Muffenabschnifts der Außenschlauch (Sa) in die Muffenformfläche extrudiert wird und an der Muffenformfläche zur Anlage gebracht wird und der Innenschlauch (Si) in den bereits über die gesamte axiale Länge der Muffenformfläche in Anlage liegenden Außenschlauch (Sa) extrudiert wird und dabei an der Innenseite des genannten an der Muffenformfläche bereits Ober die gesamt axiale Länge der Muffenformfläche in Anlage liegenden Außenschlauch (Sa) zur Anlage gebracht wird,
**dadurch gekennzeichnet,**
**dass** der auf die Innenseite des Außenschlauchs (Sa) einwirkende Druck (pa1) reduziert wird (pa2) kurz bevor oder gleichzeitig, wenn der Außenschlauch (Sa) in die Muffenformfläche extrudiert wird,
**dass** der auf die Innenseite des Außenschlauchs (Sa) einwirkende Druck (pa2) erhöht wird (pa1), sobald die Extrusion des Außenschlauchs (Sa) in die Muffenformfläche beendet ist,
**dass** der auf die Innenseite des Innenschlauchs (Si) einwirkende Druck (pi1) erhöht wird (pi2), bevor oder gleichzeitig wenn der Innenschlauch in den an der Muffenformfläche bereits anliegenden Außenschlauch (Sa) extrudiert wird, und
**dass** der auf die Innenseite des Innenschlauchs (Si) einwirkende Druck (pi2) reduziert wird (pi1), sobald die Extrusion des Innenschlauchs (Si) in den an der Muffenformfläche anliegenden Außenschlauch (Sa) beendet ist.

2. Verfahren nach Anspruch 1,
**dadurch gekennzeichnet,**
**dass** der auf die Innenseite des Außenschlauchs (Sa) einwirkende Druck (pa2) konstant oder abfallend oder alternierend erfolgt, solange die Extrusion des Außenschlauchs in die Muffenformfläche erfolgt.

3. Verfahren nach Anspruch 2,
**dadurch gekennzeichnet,**
**dass** für den auf die Innenseite des Außenschlauchs (Sa) einwirkenden Druck (pa2) bei der bei der Extrusion des Außenschlauchs in die Muffenformfläche für zunehmende Außenrohrdurchmesser und/oder zunehmende Außenrohrwandstärken und/oder zunehmende Innenrohrwandstärken abnehmende, d.h. geringere Druckwerte gewählt werden.

4. Verfahren nach einem der vorangehenden Ansprüche,
**dadurch gekennzeichnet,**
**dass** die bei Beendigung der Extrusion des Außenschlauchs (Sa) in die Muffenformfläche erfolgende Druckerhöhung des auf die Innenseite des Außenschlauchs (Sa) einwirkenden Drucks (pa2, pa1) einen zumnindest ungefähr gleichen Betrag hat, wie die Druckreduktion des auf die Innenseite des Außenschlauchs (Sa) einwirkenden Drucks (pa1) kurz bevor oder kurzzeitig, wenn der Außenschlauch (Sa) in die Muffenformfläche extrudiert wird.

5. Verfahren nach einem der vorangehenden Ansprüche,
**dadurch gekennzeichnet,**
**dass** der auf die Innenseite des Innenschlauchs (Si) einwirkende Druck (pi2) konstant oder abfallend oder alternierend eingestellt wird, so lange der Innenschlauch (Si) in den an der Muffenformfläche anliegenden Außenschlauch (Sa) exdrudiert wird.

6. Verfahren nach Anspruch 5,
**dadurch gekennzeichnet,**
**dass** für den auf die Innenseite des Innenschlauchs (Si) einwirkende Druck (pi2) bei der Extrusion des Innenschlauchs (Si) in den an der Muffenformfläche bereits anliegenden Außenschlauch (Sa) für zunehmende Außenrohrdurchmesser und/oder zunehmende Außenrohrwandstärken und/oder zunehmende Innenrohrwandstärken abnehmende, d.h. geringere Druckwerte gewählt werden.

7. Verfahren nach einem der vorangehenden Ansprüche,
**dadurch gekennzeichnet**
**dass** die bei Beendigung der Extrusion des Innenschlauchs (Si) In den an der Muffenformfläche anliegenden Außenschlauch (Sa) erfolgende Druckreduktion des auf die Innenseite des Innenschlauchs (Si) einwirkenden Drucks (pi1, pi2) einen zumindest ungefähr gleichen Betrag hat, wie die Druckerhöhung des auf die Innenseite des Innenschlauchs (Si) einwirkenden Drucks (pi1), bevor oder gleichzeitig, wenn der Innenschlauch in den an der Muffenformfläche bereits anliegenden Außenschlauch (Sa) extrudiert wird.

8. Verfahren nach einem der vorangehenden Ansprüche,
**dadurch gekennzeichnet,**
**dass** für den auf die Innenseite des Außenschlauchs (Sa) einwirkenden Druck (pa1) bei der Extrusion des Außenschlauchs (Sa) in die gewellte Formfläche für zunehmende Außenrohrdurchmesser und/oder zunehmende Außenrohrwandstärken und/oder zunehmende Innenrohrwandstärken abnehmende, d.h. geringere Druckwerte gewählt werden.

9. Verfahren nach einem der vorangehenden Ansprüche,
**dadurch gekennzeichnet,**
**dass** für den auf die Innenseite des Innenschlauchs (Si) einwirkenden Druck (pi1) bei der Extrusion des Innenschlauchs (Si) in den an der geweilten Formfläche in Anlage liegenden Außenschlauch (Sa für zunehmende Außenrohrdurchmesser und/oder zunehmende Außenrohrwandstärken und/oder zunehmende Innenrohrwandstärken abnehmende, d.h. geringere Druckwerte gewählt werden.

## Claims

1. Method for producing an endless, double-walled pipe, preferably consisting of thermoplastic material, having corrugated pipe sections and socket pipe sections,
by extrusion of an external sleeve (Sa) forming the external pipe of the double-walled pipe and of an internal sleeve (Si) forming the internal pipe of the double-walled pipe in a moulded channelling (10), having at least one section with a corrugated mould surface and at least one section with a preferably smooth, cylindrical or slightly conical socket mould surface;
wherein provision is made
for the external sleeve (Sa) to extrude into the corrugated mould surface for forming a corrugated pipe section and to be pressed against the corrugated mould surface, and for the internal sleeve (Si) to extrude into the external sleeve (Sa) and to be pressed against the external sleeve (Sa) fitted to the corrugated mould surface in the region of the troughs of the external sleeve (Sa);
for the external sleeve (Sa) to extrude into the socket mould surface for forming a socket section and to be pressed against the socket mould surface, and for the internal sleeve (Si) to extrude into the external sleeve (Sa) which is already located above the entire axial length of the socket mould surface, and thus to be pressed against the internal side of said external sleeve (Sa) located on the socket mould surface already above the entire axial length of the socket mould surface,
**characterised in that**,
the pressure (pa1) acting on the internal side of the external sleeve (Sa) is reduced (pa2) shortly before, or at the same time as when, the external sleeve (Sa) is extruded into the socket mould surface,
the pressure (pa2) acting on the internal side of the external sleeve (Sa) is increased (pa1) as soon as the extrusion of the external sleeve (Sa) into the socket mould surface is completed,
the pressure (pi1) acting on the internal side of the internal sleeve (Si) is increased (pi2) before, or at the same time as when, the internal sleeve is extruded into the external sleeve (Sa) already fitted to the socket mould surface, and
the pressure (pi2) acting on the internal side of the internal sleeve (Si) is reduced (pi1) as soon as the extrusion of the internal sleeve (Si) into the external sleeve (Sa) fitted to the socket mould surface is completed.

2. Method according to claim 1,
**characterised in that**,
the pressure (pa2) acting on the internal side of the external sleeve (Sa) occurs constantly, sloping off or alternatingly while the extrusion of the external sleeve into the socket mould surface is taking place.

3. Method according to claim 2,
**characterised in that**,
decreasing, i.e. lower, pressure values are selected for the pressure (pa2) acting on the internal side of the external sleeve (Sa) in the extrusion of the external sleeve into the socket mould surface for an increasing external pipe diameter and/or an increasing external pipe wall thickness and/or an increasing internal pipe wall thickness.

4. Method according to one of the preceding claims,
**characterised in that**,
at the completion of the extrusion of the external sleeve (Sa) into the socket mould surface, the increase in pressure carried out on the pressure (pa2, pa1) acting on the internal side of the external sleeve (Sa) has at least an approximately equal figure to the pressure reduction of the pressure (pa1) acting on the internal side of the external sleeve (Sa) shortly before, or temporarily when, the external sleeve (Sa) is extruded into the socket mould surface.

5. Method according to one of the preceding claims,
**characterised in that**,
the pressure (pi2) acting on the internal side of the internal sleeve (Si) is adjusted constantly, sloping off or alternatingly, while the internal sleeve (Si) is extruded into the external sleeve (Sa) fitted to the socket mould surface.

6. Method according to claim 5,
**characterised in that**,
decreasing, i.e. lower, pressure values are selected for the pressure (pi2) acting on the internal side of the internal sleeve (Si) in the extrusion of the internal sleeve (Si) into the external sleeve (Sa) already fitted to the socket mould surface for an increasing external pipe diameter and/or an increasing external pipe wall thickness and/or an increasing internal pipe wall thickness.

7. Method according to one of the preceding claims,
**characterised in that**,
at the completion of the extrusion of the internal sleeve (Si) into the external sleeve (Sa) fitted to the socket mould surface, the reduction in pressure carried out on the pressure (pi2, pi1) acting on the internal side of the internal sleeve (Si) has at least an approximately equal figure to the pressure increase of the pressure (pi1) acting on the internal side of the internal sleeve (Si) shortly before, or at the same time as when, the internal sleeve (Si) is extruded into the external sleeve (Sa) already fitted to the socket mould surface.

8. Method according to one of the preceding claims,
**characterised in that**,
decreasing, i.e. lower, pressure values are selected for the pressure (pa1) acting on the internal side of the external sleeve (Sa) in the extrusion of the external sleeve (Sa) into the corrugated mould surface for an increasing external pipe diameter and/or an increasing external pipe wall thickness and/or an increasing internal pipe wall thickness.

9. Method according to one of the preceding claims,
**characterised in that**,
decreasing, i.e. lower, pressure values are selected for the pressure (pi1) acting on the internal side of the internal sleeve (Si) in the extrusion of the internal sleeve (Si) into the corrugated mould surface located in the external sleeve (Sa) for an increasing external pipe diameter and/or an increasing external pipe wall thickness and/or an increasing internal pipe wall thickness.

## Revendications

1. Procédé de fabrication d'un tube continu à double paroi, réalisé de préférence dans un matériau thermoplastique, comportant des segments de tube ondulés et des segments de tube à manchons,
par extrusion d'un tuyau flexible extérieur (Sa) formant le tube extérieur du tube à double paroi et d'un tuyau flexible intérieur (Si) formant le tube intérieur du tube à double paroi, dans un canal de formage (10) comportant au moins une section avec une surface de formage ondulée et au moins une section avec une surface de formage à manchons de préférence lisse, cylindrique ou légèrement conique;
selon lequel il est prévu
que pour le formage d'un segment de tube ondulé, le tuyau flexible extérieur (Sa) est extrudé dans la surface de formage ondulée et est amené en appui contre la surface de formage ondulée, et le tuyau flexible intérieur (Si) est extrudé à l'intérieur du tuyau flexible extérieur (Sa) et est amené en appui contre le tuyau flexible extérieur (Sa), appuyé contre la surface de formage ondulée, dans la zone des creux de l'ondulation du tuyau flexible extérieur (Sa) ;
que pour le formage d'un segment de tube à manchons, le tuyau flexible extérieur (Sa) est extrudé dans la surface de formage à manchons, et est amené en appui contre la surface de formage à manchons, et le tuyau flexible intérieur (Si) est extrudé à l'intérieur du tuyau flexible extérieur (Sa) déjà en appui sur toute la longueur axiale de la surface de formage à manchons et, en outre, est amené en appui contre la face intérieure dudit tuyau flexible extérieur (Sa) déjà en appui contre la surface de formage à manchons sur toute la longueur axiale de la surface de formage à manchons ;
**caractérisé**
**en ce que** la pression (pa1) exercée sur la face intérieure du tuyau flexible extérieur (Sa) est diminuée (pa2) juste avant que le tuyau flexible extérieur (Sa) soit extrudé dans la surface de formage à manchons ou en même temps que ce processus,
**en ce que** la pression (pa2) exercée sur la face intérieure du tuyau flexible extérieur (Sa) est diminuée (pa1) dès la fin de l'extrusion du tuyau flexible extérieur (Sa) dans la surface de formage à manchons,
**en ce que** la pression (pi1) exercée sur la face intérieure du tuyau flexible intérieur (Si) est diminuée (pi2) juste avant que le tuyau flexible intérieur (Si) soit extrudé dans le tuyau flexible extérieur (Sa) déjà en appui contre la surface de formage à manchons ou en même temps que ce processus,
**en ce que** la pression (pi2) exercée sur la face intérieure du tuyau flexible intérieur (Si) est diminuée (pi1) dès la fin de l'extrusion du tuyau flexible intérieur (Si) dans le tuyau flexible extérieur (Sa) en appui contre la surface de formage à manchons.

2. Procédé selon la revendication 1, **caractérisé en ce que** la pression (pa2) exercée sur la face intérieure du tuyau flexible extérieur (Sa) est appliquée de manière constante ou décroissante ou alternée, tant que se produit l'extrusion du tuyau flexible extérieur dans la surface de formage à manchons.

3. Procédé selon la revendication 2, **caractérisé en ce que** pour la pression (pa2) exercée sur la face intérieure du tuyau flexible extérieur (Sa), on choisit, pendant l'extrusion du tuyau flexible extérieur dans la surface de formage à manchons, des valeurs de pression décroissantes, c'est-à-dire plus faibles, pour des diamètres croissants du tube extérieur et/ou pour des épaisseurs de paroi croissantes du tube extérieur et/ou des épaisseurs de paroi croissantes du tube intérieur.

4. Procédé selon l'une quelconque des revendications précédentes, **caractérisé en ce que** l'augmentation, produite à la fin de l'extrusion du tuyau flexible extérieur (Sa) dans la surface de formage à manchons, de la pression (pa2, pa1) exercée sur la face intérieure du tuyau flexible extérieur (Sa) a une valeur au moins à peu près égale à la diminution de la pression (pa1) exercée sur la face intérieure du tuyau flexible extérieur (Sa) pendant un court intervalle de temps ou juste avant que le tuyau flexible extérieur (Sa) soit extrudé dans la surface de formage à manchons.

5. Procédé selon l'une quelconque des revendications précédentes, **caractérisé en ce que** la pression (pi2), exercée sur la face intérieure du tuyau flexible intérieur (Si), est réglée à une valeur constante ou décroissante ou de manière alternée tant que le tuyau flexible intérieur (Si) est extrudé dans le tuyau flexible extérieur (Sa) en appui contre la surface de formage à manchons.

6. Procédé selon la revendication 5, **caractérisé en ce que** pour la pression (pi2) exercée sur la face intérieure du tuyau flexible intérieur (Si), on choisit, pendant l'extrusion du tuyau flexible intérieur (Si) dans le tuyau flexible extérieur (Sa) déjà en appui contre la surface de formage à manchons, des valeurs de pression décroissantes, c'est-à-dire plus faibles, pour des diamètres croissants du tube extérieur et/ou pour des épaisseurs de paroi croissantes du tube extérieur et/ou des épaisseurs de paroi croissantes du tube intérieur.

7. Procédé selon l'une quelconque des revendications précédentes, **caractérisé en ce que** la diminution, produite à la fin de l'extrusion du tuyau flexible intérieur (Si) dans le tuyau flexible extérieur (Sa) en appui contre la surface de formage à manchons, de la pression (pi1, pi2) exercée sur la face intérieure du tuyau flexible intérieur (Si) a une valeur au moins à peu près égale à l'augmentation de la pression (pi1) exercée sur la face intérieure du tuyau flexible intérieur (Si) avant ou pendant que le tuyau flexible intérieur est extrudé dans le tuyau flexible extérieur (Sa) déjà en appui contre la surface de formage à manchons.

8. Procédé selon l'une quelconque des revendications précédentes, **caractérisé en ce que** pour la pression (pa1) exercée sur la face intérieure du tuyau flexible extérieur (Sa), on choisit, pendant l'extrusion du tuyau flexible extérieur (Sa) dans la surface de formage ondulée, des valeurs de pression décroissantes, c'est-à-dire plus faibles, pour des diamètres croissants du tube extérieur et/ou pour des épaisseurs de paroi croissantes du tube extérieur et/ou des épaisseurs de paroi croissantes du tube intérieur.

9. Procédé selon l'une quelconque des revendications précédentes, **caractérisé en ce que** pour la pression (pi1) exercée sur la face intérieure du tuyau flexible intérieur (Si), on choisit, pendant l'extrusion du tuyau flexible intérieur (Si) dans le tuyau flexible extérieur (Sa) en appui contre la surface de formage ondulée, des valeurs de pression décroissantes, c'est-à-dire plus faibles, pour des diamètres croissants du tube extérieur et/ou pour des épaisseurs de paroi croissantes du tube extérieur et/ou des épaisseurs de paroi croissantes du tube intérieur.
